# EUROPÄISCHE PATENTSCHRIFT

(11) **EP 2 746 546 B1**
(45) Veröffentlichungstag und Bekanntmachung des Hinweises auf die Patenterteilung: **06.09.2017**
(21) Anmeldenummer: 13177570.2
(22) Anmeldetag: 23.07.2013
(51) Int. Cl.: F01N 3/04, F01N 13/10, F01N 13/14

(54) **Abgaskrümmer**
Exhaust manifold
Collecteur de gaz d'échappement

(30) Priorität: 20.12.2012 DE 102012223981
(43) Veröffentlichungstag der Anmeldung: 25.06.2014
(73) Patentinhaber: Friedrich Boysen GmbH & Co. KG, 72213 Altensteig (DE)
(72) Erfinder: Sahan, Ramazan, 72285 Pfalzgrafenweiler (DE)
(74) Vertreter: Manitz Finsterwald Patentanwälte PartmbB

(56) Entgegenhaltungen:
- EP-A1- 2 450 543
- EP-A2- 1 862 651
- DE-A1- 19 952 648
- DE-U1-202007 015 606
- FR-A1- 2 873 747

## Beschreibung

Die vorliegende Erfindung betrifft einen Abgaskrümmer einer Abgasanlage eines Verbrennungsmotors mit einer den Abgasstrom führenden Schale und einem Eintrittsflansch, der zur Anbindung an eine Komponente des Verbrennungsmotors ausgebildet ist.
Ein Abgaskrümmer dient dazu, die in einem Verbrennungsmotor entstehenden heißen Gase an den Auslässen der Motorzylinder aufzunehmen und an nachfolgende Komponenten der Abgasanlage, beispielsweise an einen Turbolader, weiterzuleiten. Mittels des Eintrittsflansches wird ein Abgaskrümmer üblicherweise unmittelbar an die entsprechenden Motorauslässe angeflanscht, sodass die Schale die abströmenden Verbrennungsgase, welche je nach Krümmertyp in einem oder mehreren Innenrohren geführt sein können, vollständig umschließt.
Um eine zuverlässige Gasführung sicherzustellen, sind Schalen von Abgaskrümmern üblicherweise rohrartig ausgebildet. Um hierbei die Herstellung zu vereinfachen, kann eine solche rohrartige Schale aus zwei miteinander verschweißen Halbschalen zusammengesetzt sein, wie z.B. in den Dokumenten EP2450543A1 oder EP1862651A2 offenbart. Bei allen bekannten Formen von Krümmerschalen sind jedoch relativ viele Arbeitsschritte zur Herstellung erforderlich. Zudem ist eine Abwandlung einer Krümmerschale nur unter erhöhtem Aufwand möglich, da z.B. die Herstellung von Halbschalen aus Blech einen Tiefziehprozess erfordert und somit für jede neue Schalenform ein eigenes Ziehwerkzeug bereitgestellt werden muss.

Es ist eine Aufgabe der Erfindung, einen Abgaskrümmer zu schaffen, der einfach und kostengünstig herstellbar ist und der leicht an verschiedene Arten von Verbrennungsmotoren und Abgasanlagen anpassbar ist.

Diese Aufgabe wird durch einen Abgaskrümmer mit den Merkmalen des Anspruchs 1 gelöst. Erfindungsgemäß ist die Schale an einer zu dem Eintrittsflansch hin weisenden Eintrittsseite vollständig geöffnet und entlang einer Umrandung der Öffnung an dem Eintrittsflansch befestigt. Die Schale ist also einseitig offen und somit halbschalenartig ausgebildet, jedoch nicht etwa mit einer ergänzenden Halbschale verbunden, sondern direkt an dem Eintrittsflansch befestigt. Durch die einseitig offene Ausbildung der Schale ist eine besonders einfache Herstellung möglich. Gegenüber Systemen, bei welchen eine rohrförmige Schale aus zwei Halbschalen zusammengesetzt ist, ermöglicht die Erfindung jedoch ein Weglassen der zweiten Halbschale, wodurch die Herstellung eines Abgaskrümmers besonders einfach wird. Erfindungsgemäß wurde insbesondere erkannt, dass der - ohnehin vorzusehende - Eintrittsflansch selbst als ergänzende Abdeckung für die Öffnung einer Halbschale genutzt werden kann. Außerdem ist aufgrund der direkten Befestigung der einseitig geöffneten Schale an dem Eintrittsflansch kein Einstecken von Eintrittskanälen in entsprechende Aussparungen des Eintrittsflansches erforderlich, wodurch die Schweißnahtlänge verringert und folglich der Herstellungsprozess weiter vereinfacht wird.

Insbesondere kann aufgrund der einseitig offenen Gestaltung der Schale ein modulares und flexibles System zum Aufbau verschiedener Abgaskrümmer mit vielen Gleichteilen bereitgestellt werden. Die Schale kann hierbei in einem einfachen, nahezu werkzeugfreien Herstellungsprozess mit einfachem Beschnitt gefertigt werden. Ein derartiges Baukastensystem ermöglicht die einfache Herstellung von Abgaskrümmern für unterschiedliche Motorkonfigurationen, wobei z.B. die Zylinderzahl frei wählbar ist. D.h. auch Abgaskrümmer für Motoren mit ungewöhnlichen Zylinderzahlen sind auf einfache Weise innerhalb eines Baukastensystems herstellbar.
Weiterbildungen der Erfindung sind in den abhängigen Ansprüchen, der Beschreibung sowie den beigefügten Zeichnungen angegeben.
Gemäß einer Ausführungsform der Erfindung ist die Schale entlang der Umrandung mit dem Eintrittsflansch stoffschlüssig verbunden, insbesondere verschweißt. Die Schale kann auch entlang der Umrandung mit dem Eintrittsflansch verlötet sein. Durch das stoffschlüssige Verbinden wird ein gasdichtes Verschließen der durch die Halbschalenform bedingten Öffnung der Schale gewährleistet. Zudem ist eine ausreichende Stabilität des Gesamtbauteils sichergestellt.

Gemäß der Erfindung umfasst die Schale ein flächiges, bevorzugt einstückiges Basisteil, das bezüglich einer Biegeachse gebogen ist und dessen sich parallel zur Biegeachse erstreckende Randabschnitte an dem Eintrittsflansch befestigt sind, wobei bevorzugt diejenigen Seitenöffnungen, welche durch die sich quer zu der Biegeachse erstreckenden gebogenen Randabschnitte des Basisteils und die Befestigungsfläche des Eintrittsflansches begrenzt sind, jeweils durch eine Verschlusskappe verschlossen sind. Das flächige Basisteil kann insbesondere ein Blechteil sein. Das Biegen des flächigen Basisteils entlang einer Biegeachse kann auf einfache und schnelle Weise und darüber hinaus werkzeugfrei erfolgen, beispielsweise an einem Biegedorn. Gegenüber einem Tiefziehprozess, der das Bereitstellen eines spezifischen Werkzeugs erfordert und relativ aufwändig ist, kann das Biegen entlang einer Biegeachse für mehrere unterschiedliche Basisteile an ein und derselben Vorrichtung erfolgen. Die bei einem einfachen Biegen unweigerlich an den Stirnseiten entstehenden Öffnungen können durch Verschlusskappen auf einfache Weise gasdicht verschlossen werden. Hierbei ist es von Vorteil, dass die Verschlusskappen für unterschiedliche Arten von Krümmerschalen, zum Beispiel für unterschiedlich lange Basisteile, gleichermaßen verwendet werden können. Demgegenüber ist es bei einer tiefgezogenen Krümmerschale zwingend erforderlich, je nach Längenvariante ein eigenes Werkzeug bereitzustellen.
Um einen Toleranzausgleich für einen Beschnitt der Schale zu ermöglichen und somit bei der Herstellung eine hohe Prozesssicherheit sicherzustellen, kann vorgesehen sein, dass die Verschlusskappen mit dem Basisteil zumindest teilweise überlappen. Allgemein können die Verschlusskappen als Ziehteile oder als Prägeteile ausgeführt sein. Die Ausführung als Prägeteil hat gegenüber der Ausführung als Ziehteil den Vorteil, dass die Herstellung weiter vereinfacht ist.
Bei Bedarf kann in der Schale wenigstens eine Aussparung oder Durchführung vorgesehen sein, welche einen Zugriff auf Innenrohre des Abgaskrümmers vom Außenraum aus ermöglicht. Solche Aussparungen können zum Anbringen von Sensoren dienen oder Gasentnahmestellen definieren - beispielsweise für ein System zur Abgasrückführung. Außerdem können derartige Aussparungen für eine Zufuhr und Abfuhr von Kühlfluid in einen Kühlmantel des Abgaskrümmers genutzt werden. Erfindungsgemäß sind Aussparungen an den Verschlusskappen vorgesehen. Die Aussparungen ermöglichen es, Bauteile für eine Sensorik und/oder für eine Gasentnahme durch die äußere Schale hindurch in gasführende Innenrohre des Abgaskrümmers einzubringen. Von Vorteil ist insbesondere, dass durch einfaches Einbringen von Stutzen eine Schnittstelle sowohl für Sensoren als auch für Gasentnahmestellen oder für Kühlmittelanschlüsse zur Verfügung gestellt werden kann.

Die Schale kann aus Blech, insbesondere aus Stahlblech, gefertigt sein. Dies stellt eine ausreichende Festigkeit bei den in einer Abgasanlage auftretenden hohen Temperaturen sicher.

Gemäß einer besonderen Ausgestaltung der Erfindung ist die Schale zumindest teilweise aus einem ferritischen Stahlblech gefertigt. Während austenitische Stähle sich im Allgemeinen gut für Ziehprozesse eignen, ist ein Ziehen bei Bauteilen aus ferritischen Stählen problematisch. Hingegen ist ein einfaches Biegen für Blechteile aus austenitischen Stählen und für Blechteile aus ferritischen Stählen gleichermaßen leicht durchführbar. Die Anzahl der bei der Fertigung eines Abgaskrümmers verwendbaren Materialien ist also durch die Erfindung erhöht. Somit kann für eine jeweilige Anwendung aus einer Vielzahl von möglichen Materialien das jeweils passende Material ausgewählt werden.

Der Eintrittsflansch kann einstückig und vorzugsweise plattenförmig ausgebildet sein. Dies ermöglicht einerseits eine einfache Konstruktion und andererseits eine günstige Anbindung an einen entsprechenden Gegenflansch des Motors. Prinzipiell kann der Eintrittsflansch auch mehrteilig ausgeführt sein.

Gemäß einer weiteren Ausführungsform der Erfindung weist die Schale eine Austrittsöffnung auf, wobei bevorzugt ein die Austrittsöffnung umschließender Austrittsflansch an der Schale befestigt ist. Die Austrittsöffnung kann durch Stanzen oder Laserschneiden in der Schale erzeugt werden. Dies kann werkzeugfrei und an unterschiedlichen Stellen der Schale erfolgen, sodass auf einfache Weise unterschiedliche Varianten eines Abgaskrümmers herstellbar sind. Es können auch auf einfache Weise unterschiedliche Arten von Austrittsflanschen an ein und denselben Krümmerschalentyp angeschweißt werden.

Die Austrittsöffnung kann in Abhängigkeit von der geplanten Anwendung an einer beliebigen Stelle der Schale, d.h. insbesondere außen, mittig oder dazwischenliegend, angeordnet sein. Ein Austrittsflansch kann also aufgrund des variablen Aufbaus an beliebiger Stelle der Schale angebracht werden. Es können auch mehrere Austrittsöffnungen in beliebiger Verteilung vorgesehen sein.

Weiterhin kann in der Schale wenigstens ein gasführendes Innenrohr angeordnet sein, welches in wenigstens eine Eintrittsöffnung des Eintrittsflansches eingesteckt ist, wobei insbesondere zwischen dem Innenrohr und der Schale ein Luftspalt ausgebildet ist. Bei solchen luftspaltisolierten Abgaskrümmern verbleibt ein relativ hoher Anteil der Wärmeenergie des strömenden Abgases in dem Abgasstrom selbst, wo er günstiger Weise zum Aufheizen eines Katalysators beitragen kann. Bei der Ausführung eines Krümmers mit Innenrohr stellt die Schale also die Außenschale eines mehrschaligen Aufbaus dar. Dies ist jedoch nicht zwingend. Vielmehr kann eine Schale wie vorstehend beschrieben auch als Innenschale eines mehrschaligen Abgaskrümmers ausgebildet sein.

Ein besonderer Vorteil der Erfindung besteht darin, dass der Luftspalt auf einfache und schnelle Weise variiert werden kann, um so die Isolationswirkung exakt an eine konkrete Anwendung anzupassen. Eine Veränderung der Größe des Luftspalts kann nämlich in einfacher Weise dadurch erzielt werden, dass die Formgebung der Schale derart angepasst wird, dass sich ein vorgegebener Abstand der Schalenwand zu den Innenrohren ergibt. Ein größerer Luftspalt führt zu einer niedrigeren Temperatur an der Außenseite des Abgaskrümmers, sodass ein größerer Betrag an thermischer Energie im Abgas verbleibt. Durch Variation des Luftspalts kann daher Einfluss auf die Abgastemperatur genommen werden. Bei einer als Tiefziehteil ausgeführten Schale ist die Größe des Luftspalts hingegen nur unter beträchtlichem Aufwand veränderbar.

Eine spezielle Ausgestaltung der Erfindung sieht vor, dass der Raum zwischen dem Innenrohr und der Schale zumindest teilweise mit einem wärmeisolierenden Material gefüllt ist. Bevorzugt ist als wärmeisolierendes Material ein Fasermaterial, wie ein Glasfaser- oder Silikatfasermaterial, und/oder ein keramisches Material vorgesehen. Hierdurch kann die Isolierwirkung verstärkt werden. Es kann auch sein, dass ein Teil des Raums zwischen dem Innenrohr und der Schale als Luftspalt ausgeführt ist und der übrige Teil mit einem wärmeisolierenden Material gefüllt ist. Eine solche Kombination aus Luftspalt und Isoliermaterial kann für eine Gewichts-, Package- und/oder Kostenoptimierung des herzustellenden Abgaskrümmers angepasst sein.

Eine weitere Ausführungsform der Erfindung sieht vor, dass der Raum zwischen der Schale und dem wenigstens einen gasführenden Innenrohr als von einem Kühlfluid durchströmbarer Kühlmantel ausgebildet ist, wobei insbesondere wenigstens ein Kühlfluideinlass-Anschluss und wenigstens ein Kühlfluidauslass-Anschluss an der Schale vorgesehen ist. D.h. es besteht grundsätzlich die Möglichkeit, einen bestehenden Luftspalt zwischen Schale und Innenrohr als Kühlmantel, z.B. als Wasserkühlmantel, zu verwenden. Das gasführende Innenrohr ist dann dicht zu verschließen. Insbesondere können die Schiebesitze an den Innenrohren gasdicht verschlossen werden. Anschließend ist der Luftspalt mit einem Kühlfluid, bevorzugt mit Wasser, zu füllen. Das Wasser kann gängige Additive, wie Frostschutz- und/oder Schmierstoffzusätze, in beliebiger Menge enthalten. Es kann aber auch Öl, insbesondere Motoröl, als Kühlfluid vorgesehen sein. Ein besonders ausgeprägter Kühleffekt kann durch Führen des Kühlfluids in einem Kreislauf erzielt werden, wobei der Kühlkreislauf des zugehörigen Verbrennungsmotors oder ein separater Kreislauf verwendet werden kann. Alternativ kann der Kühlmantel aus einem Motorölkreislauf oder aus einem separaten Ölkreislauf gespeist sein. Prinzipiell ist es auch möglich, den Kühlmantel aus einer externen Fluidquelle, insbesondere Wasserquelle, zu speisen. Insbesondere kann eine Zufuhr von Frischwasser, z.B. Süßwasser oder Meerwasser, vorgesehen sein. Hierdurch kann eine weitere Absenkung der Oberflächentemperatur an der Außenseite der Schale erreicht werden. Da durch einen solchen Kühlmantel auch eine Kühlung der gasführenden Innenrohre stattfindet, ist diese Ausgestaltung sogar für sehr hohe Abgastemperaturen geeignet. Ein weiterer Vorteil besteht darin, dass kaum Temperaturdifferenzen in den Bauteilen auftreten, was auch als thermomechanische Optimierung bezeichnet wird. Somit können schädliche Spannungen vermieden werden. Außerdem sind die Materialauswahl und die Konstruktion vereinfacht.

In der Schale können auch wenigstens zwei voneinander getrennte Innenrohre angeordnet sein, welche unter Berücksichtigung einer Zündfolge in unterschiedliche Eintrittsöffnungen des Eintrittsflansches eingesteckt sind. Der Innenaufbau eines erfindungsgemäßen Abgaskrümmers kann in Abhängigkeit von der jeweiligen Anwendung wahlweise mit oder ohne Zündfolge ausgeführt sein. Insbesondere bei einem Austritt des Abgases über einen Austrittsflansch in einer nicht-exponierten, d.h. nicht endseitigen, Lage kann durch einfaches Verschließen des Innenrohres die rechte Abgasflut von der linken Abgasflut getrennt werden. Eine derartige Konfiguration ist insbesondere für so genannte Twin-Scroll-Abgasturbolader oder andere Zündfolge-nutzende Systeme geeignet.

Die Erfindung betrifft auch ein Verfahren zum Herstellen eines Abgaskrümmers für eine Abgasanlage eines Verbrennungsmotors, wobei ein flächiges Rohbauteil bereitgestellt wird, das Rohbauteil entlang einer Biegeachse zu einer Halbschale gebogen wird und die Halbschale entlang der umgebogenen Randabschnitte an einem zur Anbindung an eine Komponente des Verbrennungsmotors ausgebildeten Eintrittsflansch befestigt wird. Durch das Biegen des flächigen Rohbauteils zu einer Halbschale und das Befestigen dieser Halbschale an dem Eintrittsflansch kann insbesondere ein aufwändiger Tiefziehprozess vermieden werden. An den Stirnseiten der Halbschale, an welchen aufgrund des Biegeprozesses unweigerlich Öffnungen vorhanden sind, können Verschlusskappen zur Abdichtung angebracht werden. In die Verschlusskappen können Aussparungen für Sensoren, zur Gasentnahme, beispielsweise für eine Abgasrückführung, oder zur Zu- und Abfuhr von Kühlfluid geschnitten werden.

Weiterhin kann eine Austrittsöffnung in das Rohbauteil oder in die Halbschale geschnitten werden. Die Position der Austrittsöffnung kann dabei in Abhängigkeit von dem gewünschten Typ des Abgaskrümmers individuell festgelegt werden, ohne hierfür ein eigenes Werkzeug herstellen zu müssen.

Weiterhin kann ein die Austrittsöffnung umschließender Austrittsflansch an der Halbschale befestigt werden. Gegenüber dem Vorsehen eines Austrittsflansches durch direktes Anformen an ein Schalenbauteil besteht hier der Vorteil insbesondere darin, dass unterschiedliche Arten von Austrittsflanschen an ein und derselben Halbschale befestigt werden können, ohne ein eigenständiges Werkzeug bereitstellen zu müssen.

Gemäß einer Ausführungsform der Erfindung wird die Halbschale auf eine vorgegebene Länge gestutzt. Die Länge der Schale ist also je nach Bedarf werkzeugfrei einstellbar.

Das Rohbauteil kann insbesondere auf einem Dorn mit einem runden Querschnitt zu der Halbschale gebogen werden. Ein derartiges Biegen auf einem Dorn erfordert kein aufwändig herzustellendes Ziehwerkzeug und kann daher besonders schnell, einfach und kostengünstig erfolgen.

Die Erfindung wird nachfolgend rein beispielhaft anhand der beigefügten Zeichnungen beschrieben.
- Fig. 1: ist eine Explosionsdarstellung eines erfindungsgemäßen Abgaskrümmers.

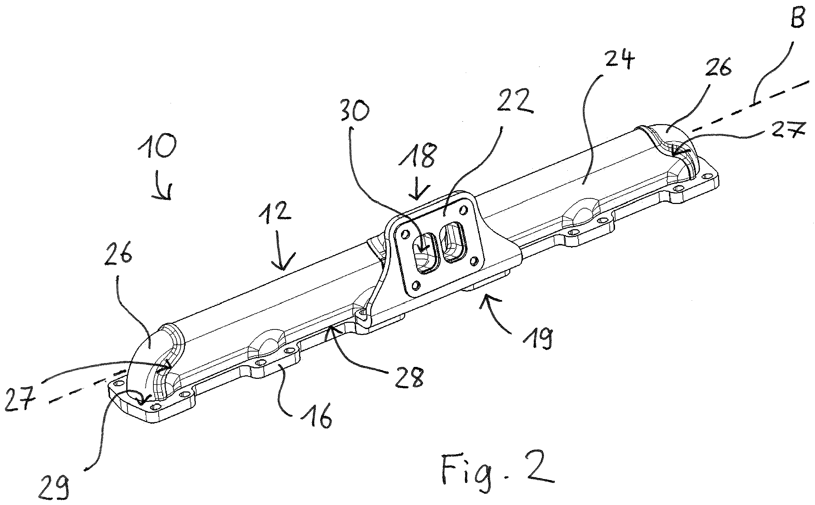

- Fig. 2: zeigt den Abgaskrümmer gemäß Fig. 1 in zusammengesetztem Zustand.

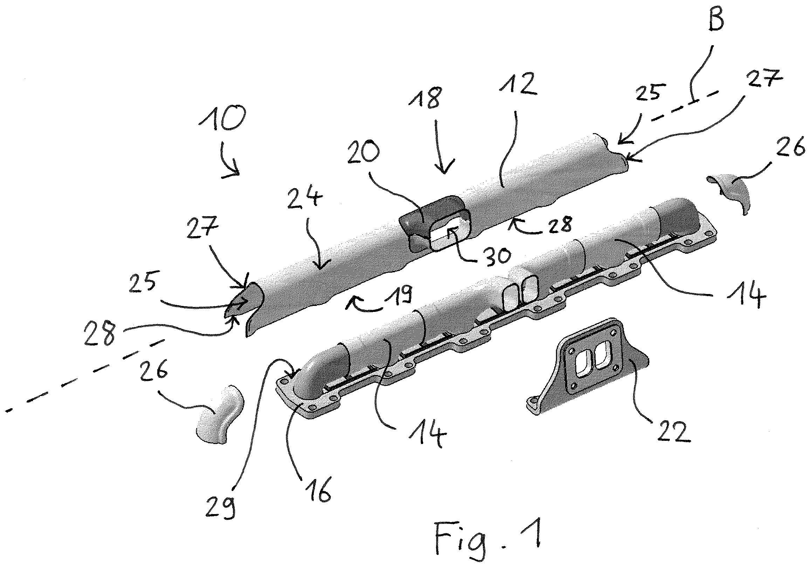

Gemäß Fig. 1 bildet ein Abgaskrümmer 10 einen Teil einer Abgasanlage, welche einem nicht dargestellten Verbrennungsmotor eines Kraftfahrzeugs zugeordnet ist.

Der Abgaskrümmer 10 ist mehrschalig aufgebaut und umfasst eine äußere Schale 12 sowie zwei gasführende Innenrohre 14. Die Innenrohre 14 sind bevorzugt aus Blech gefertigt und jeweils an einem eintrittsseitigen Ende mit einem plattenförmigen Eintrittsflansch 16 verbunden, der zur gasdichten Anbindung des Abgaskrümmers 10 an jeweilige Zylinderauslässe des Verbrennungsmotors dient. Der Eintrittsflansch 16 ist hier einstückig ausgeführt. Eine nicht dargestellte Ausführungsform sieht demgegenüber vor, dass der Eintrittsflansch mehrteilig ist. Insbesondere kann der Eintrittsflansch eine Grundplatte mit mehreren stoffschlüssig daran angebrachten, beispielsweise angeschweißten oder angelöteten, Einzelflanschen umfassen. An ihren jeweiligen austrittsseitigen Enden sind die Innenrohre 14 mit einem Austrittsflansch 18 verbunden, über welchen zum Beispiel die Verbindung des Abgaskrümmers 10 mit der Gaseinströmöffnung eines Turboladers erfolgen kann.

Wie aus Fig. 1 hervorgeht, ist die Schale 12 aus einem flächigen Basisteil 24 sowie zwei endseitigen Verschlusskappen 26 zusammengesetzt. Das flächige Basisteil 24 ist bezüglich einer Biegeachse B gebogen und vorzugsweise ebenfalls aus Blech gefertigt. Aufgrund der einfach gebogenen Form ist das Basisteil 24 einseitig offen. Die offene Seite bildet hinsichtlich der Gasströmung die Eintrittsseite 19 und weist zu dem Eintrittsflansch 16 hin.

Die sich parallel zu der Biegeachse B erstreckenden, im Wesentlichen geradlinigen Randabschnitte 28 sind direkt an eine Befestigungsfläche 29 des Eintrittsflanschs 16 angeschweißt. Diejenigen Seitenöffnungen 25, welche durch die sich quer zu der Biegeachse B erstreckenden gebogenen Randabschnitte 27 des Basisteils 24 und die Befestigungsfläche 29 des Eintrittsflansches 16 begrenzt sind, sind durch die Verschlusskappen 26 verschlossen. Konkret überlappen die Verschlusskappen 26 teilweise mit dem Basisteil 24 und sind mit diesem verschweißt. Außerdem sind die Verschlusskappen 26 auch an den entsprechenden Kontaktstellen mit der Befestigungsfläche 29 des Eintrittsflansches 16 verschweißt. Die durch das Basisteil 24 und die beiden Verschlusskappen 26 gebildete äußere Schale 12 umhüllt die Anordnung aus Innenrohren 14, vorzugsweise gasdicht. Zwischen den Innenrohren 14 und der Schale 12 ist ein einige Millimeter dicker Luftspalt zur Wärmeisolierung ausgebildet. Der Luftspalt kann bei Bedarf zumindest teilweise mit einem wärmeisolierenden Material auf Glasfaser-, Silikatfaser- oder Keramikbasis gefüllt sein.

Zur Herstellung des Abgaskrümmers 10 wird zunächst ein flächiges Rohbauteil aus Stahlblech bereitgestellt und entlang der Biegeachse B zu einer Halbschale gebogen. Diese Halbschale wird dann auf eine vorgegebene Länge gestutzt, was auch als Beschnitt bezeichnet wird. Diese Vorgehensweise ermöglicht die Herstellung unterschiedlich langer Abgaskrümmer 10 unter Verwendung ein und desselben flächigen Rohbauteils. Es wird dann eine Austrittsöffnung 30 in das durch die gebogene und gestutzte Halbschale gebildete Basisteil 24 geschnitten, zum Beispiel mittels Stanzen oder Laserschneiden. Anschließend erfolgt das Anbringen eines Rohrstutzens 20 des Austrittsflansches 18, vorzugsweise durch Anschweißen. Es werden dann die beiden Verschlusskappen 26 auf die entsprechenden Seitenöffnungen 25 aufgesetzt und mit dem Basisteil 24 verschweißt, wobei anschließend die fertige Schale 12 an den Eintrittsflansch 16 angeschweißt wird. In Abhängigkeit von der jeweiligen Anwendung kann auch zunächst ein Anschweißen des Basisteils 24 an den Eintrittsflansch 16 und erst danach ein Aufsetzen der beiden Verschlusskappen 26 zwecks Abdichtung der Seitenöffnungen 25 erfolgen. Schließlich werden der Rohrstutzen 20 sowie die entsprechenden Enden der Innenrohre 14 mit der Anbindungsplatte 22 des Austrittsflansches 18 verbunden.

Aufgrund der Unterteilung der Schale 12 in das flächige Basisteil 24 und die beiden Verschlusskappen 26 ist zur Herstellung des Abgaskrümmers 10 kein Tiefziehprozess erforderlich. Daher ist die Herstellung unterschiedlicher Abgaskrümmer 10, beispielsweise für bestimmte Varianten von Abgasanlagen und/oder Fahrzeugen, ohne Bereitstellung jeweils eigener Werkzeuge möglich. Insbesondere kann eine Anpassung der Länge der Schale 12 auf einfache Weise über den Beschnitt erfolgen. Auch die Position der Austrittsöffnung 30, die Form des Austrittsflansches 18 sowie die Größe des Luftspalts kann werkzeugfrei angepasst werden.

Die Erfindung ermöglicht daher aufgrund des vereinfachten Schalenaufbaus die Herstellung vielfältiger Varianten von Abgaskrümmern 10 nach Art eines Baukastens unter Verwendung ein und desselben Biegewerkzeugs sowie ein und derselben Form von Verschlusskappen 26. Somit können zum Beispiel auf einfache und kostengünstige Weise Abgaskrümmer 10 für verschiedene Zylinderzahlen realisiert werden. Auch hinsichtlich der verwendeten Materialien ist die Flexibilität bei einem Abgaskrümmer wie vorstehend beschrieben gegenüber bekannten Formen von Abgaskrümmern erhöht. Insbesondere spielt es aufgrund des einfachen Biegeprozesses keine Rolle, ob austenitische Stahlbleche oder ferritische Stahlbleche verwendet werden.

### Bezugszeichenliste

- 10: Abgaskrümmer
- 12: Schale
- 14: Innenrohr
- 16: Eintrittsflansch
- 18: Austrittsflansch
- 19: Eintrittsseite
- 20: Rohrstutzen
- 22: Anbindungsplatte
- 24: flächiges Basisteil
- 25: Seitenöffnung
- 26: Verschlusskappe
- 27: gebogener Randabschnitt
- 28: gerader Randabschnitt
- 29: Befestigungsfläche
- 30: Austrittsöffnung

- B: Biegeachse

## Patentansprüche

1. Abgaskrümmer (10) einer Abgasanlage eines Verbrennungsmotors mit einer den Abgasstrom führenden Schale (12) und einem Eintrittsflansch (16), der zur Anbindung an eine Komponente des Verbrennungsmotors ausgebildet ist, wobei die Schale (12) an einer zu dem Eintrittsflansch (16) hin weisenden Eintrittsseite (19) vollständig geöffnet ist und entlang einer Umrandung (28) der Öffnung an dem Eintrittsflansch (16) befestigt ist, wobei die Schale (12) ein flächiges, bevorzugt einstückiges Basisteil (24) umfasst, das bezüglich einer Biegeachse (B) gebogen ist und dessen sich parallel zur Biegeachse (B) erstreckende Randabschnitte (28) an dem Eintrittsflansch (16) befestigt sind, wobei diejenigen Seitenöffnungen (25), welche durch die sich quer zu der Biegeachse (B) erstreckenden gebogenen Randabschnitte (27) des Basisteils (24) und der Befestigungsfläche (29) des Eintrittsflansches (16) begrenzt sind, jeweils durch eine Verschlusskappe (26) verschlossen sind,
**dadurch gekennzeichnet, dass**
an den Verschlusskappen (26) Aussparungen für Sensoren, zur Gasentnahme, beispielsweise für eine Abgasrückführung, oder zur Zu- und Abfuhr von Kühlfluid vorgesehen sind.

2. Abgaskrümmer nach Anspruch 1,
**dadurch gekennzeichnet, dass**
die Schale (12) entlang der Umrandung (28) mit dem Eintrittsflansch (16) stoffschlüssig verbunden, insbesondere verschweißt, ist.

3. Abgaskrümmer nach Anspruch 1 oder 2,
**dadurch gekennzeichnet, dass**
die Verschlusskappen (26) mit dem Basisteil (24) zumindest teilweise überlappen.

4. Abgaskrümmer nach einem der vorstehenden Ansprüche,
**dadurch gekennzeichnet, dass**
die Schale (12) aus Blech, insbesondere aus Stahlblech, gefertigt ist, wobei die Schale (12) bevorzugt zumindest teilweise aus einem ferritischen Stahlblech gefertigt ist.

5. Abgaskrümmer nach einem der vorstehenden Ansprüche,
**dadurch gekennzeichnet, dass**
der Eintrittsflansch (16) einstückig und vorzugsweise plattenförmig ausgebildet ist und/oder dass
die Schale (12) eine Austrittsöffnung (30) aufweist, wobei, bevorzugt, ein die Austrittsöffnung (30) umschließender Austrittsflansch (18) an der Schale (12) befestigt ist.

6. Abgaskrümmer nach einem der vorstehenden Ansprüche,
**dadurch gekennzeichnet, dass**
in der Schale (12) wenigstens ein gasführendes Innenrohr (14) angeordnet ist, welches in wenigstens eine Eintrittsöffnung des Eintrittsflansches (16) eingesteckt ist, wobei insbesondere zwischen dem Innenrohr (14) und der Schale (12) ein Luftspalt ausgebildet ist.

7. Abgaskrümmer nach Anspruch 6,
**dadurch gekennzeichnet, dass**
in der Schale (12) wenigstens eine Aussparung oder Durchführung vorgesehen ist, welche einen Zugriff auf das wenigstens eine gasführende Innenrohr (14) vom Außenraum aus ermöglicht.

8. Abgaskrümmer nach Anspruch 6 oder 7,
**dadurch gekennzeichnet, dass**
der Raum zwischen der Schale (12) und dem wenigstens einen gasführenden Innenrohr (14) zumindest teilweise mit einem wärmeisolierenden Material gefüllt ist.

9. Abgaskrümmer nach einem der Ansprüche 6 bis 8,
**dadurch gekennzeichnet, dass**
der Raum zwischen der Schale (12) und dem wenigstens einen gasführenden Innenrohr (14) als von einem Kühlfluid durchströmbarer Kühlmantel ausgebildet ist, wobei insbesondere wenigstens ein Kühlfluideinlass-Anschluss und wenigstens ein Kühlfluidauslass-Anschluss an der Schale (12) vorgesehen ist.

10. Abgaskrümmer nach einem der Ansprüche 6 bis 9,
**dadurch gekennzeichnet, dass**
in der Schale (12) wenigstens zwei voneinander getrennte Innenrohre (14) angeordnet sind, welche unter Berücksichtigung einer Zündfolge in unterschiedliche Eintrittsöffnungen des Eintrittsflansches (16) eingesteckt sind.

11. Verfahren zum Herstellen eines Abgaskrümmers (10) für eine Abgasanlage eines Verbrennungsmotors, mit den Schritten:
- Bereitstellen eines flächigen Rohbauteils;
- Biegen des Rohbauteils entlang einer Biegeachse (B) zu einer Halbschale (24); und
- Befestigen der Halbschale (24) entlang der umgebogenen Randabschnitte (28) an einem zur Anbindurig an eine Komponente des Verbrennungsmotors ausgebildeten Eintrittsflansch (16),
**dadurch gekennzeichnet, dass**
an den Stirnseiten der Halbschale (24) Verschlusskappen (26) angebracht werden, wobei in die Verschlusskappen (26) jeweilige Aussparungen für Sensoren, zur Gasentnahme, beispielsweise für eine Abgasrückführung, oder zur Zu- und Abfuhr von Kühlfluid geschnitten werden.

12. Verfahren nach Anspruch 11,
**dadurch gekennzeichnet, dass**
eine Austrittsöffnung (30) in das Rohbauteil oder in die Halbschale (24) geschnitten wird und/oder dass
ein die Austrittsöffnung (30) umschließender Austrittsflansch (18) an der Halbschale (24) befestigt wird.

13. Verfahren nach Anspruch 11 oder 12,
**dadurch gekennzeichnet, dass**
die Halbschale (24) auf eine vorgegebene Länge gestutzt wird und/oder dass
das Rohbauteil auf einem Dorn mit einem runden Querschnitt zu der Halbschale (24) gebogen wird.

## Claims

1. An exhaust manifold (10) of an exhaust gas system of an internal combustion engine having a shell (12) conducting the exhaust gas flow and having an inlet flange (16) which is configured for the connection to a component of the internal combustion engine, wherein the shell (12) is completely open at an inlet side (19) facing the inlet flange (16) and is fastened to the inlet flange (16) along a border (28) of the opening; wherein the shell (12) comprises an areal base part (24), preferably a single-piece base part, which is bent with respect to a bending axis (B) and whose marginal sections (28) which extend in parallel with the bending axis (B) are fastened to the inlet flange (16); and wherein those side openings (25) which are bound by the bent marginal sections (27) of the base part (24) and of the fastening surface (29) of the inlet flange (16) which extend transversely to the bending axis (B) are respectively closed by a closure cap (26),
**characterized in that**
cut-outs are provided at the closure caps (26) for sensors, for gas removal, for example for an exhaust gas return, or for the supply and leading away of cooling fluid.

2. An exhaust manifold in accordance with claim 1,
**characterized in that**
the shell (12) is connected, in particular welded, with material continuity to the inlet flange (16) along the border (28).

3. An exhaust manifold in accordance with claim 1 or claim 2,
**characterized in that**
the closure caps (26) at least partly overlap the base part (24).

4. An exhaust manifold in accordance with any one of the preceding claims,
**characterized in that**
the shell (12) is produced from sheet metal, in particular from steel sheet metal, with the shell (12) preferably being produced at least partly from a ferritic steel sheet metal.

5. An exhaust manifold in accordance with any one of the preceding claims,
**characterized in that**
the inlet flange (16) is configured in one piece and preferably in the shape of a plate; and/or **in that**
the shell (12) has an outlet opening (30), with an outlet flange (18) surrounding the outlet opening (30) preferably being fastened to the shell (12).

6. An exhaust manifold in accordance with any one of the preceding claims,
**characterized in that**
at least one gas conducting inner pipe (14) is arranged in the shell (12) and is inserted into at least one inlet opening of the inlet flange (16), with an air gap in particular being formed between the inner pipe (14) and the shell (12).

7. An exhaust manifold in accordance with claim 6,
**characterized in that**
at least one cut-out or leadthrough is provided in the shell (12) and allows access to the at least one gas conducting inner pipe (14) from the outer space.

8. An exhaust manifold in accordance with claim 6 or claim 7,
**characterized in that**
the space between the shell (12) and the at least one gas conducting inner pipe (14) is at least partly filled with a thermally insulating material.

9. An exhaust manifold in accordance with any one of the claims 6 to 8,
**characterized in that**
the space between the shell (12) and the at least one gas conducting inner pipe (14) is formed as a cooling jacket which can be flowed through by a cooling fluid, with in particular at least one cooling fluid inlet connector and at least one cooling fluid outlet connector being provided at the shell (12).

10. An exhaust manifold in accordance with any one of the claims 6 to 9,
**characterized in that**
at least two mutually separate inner pipes (14) are arranged in the shell (12) and are inserted into different inlet openings of the inlet flange (16) while taking account of an ignition sequence.

11. A method of manufacturing an exhaust manifold (10) for an exhaust gas system of an internal combustion engine comprising the steps:
- providing an areal unworked part;
- bending the unworked part along a bending axis (B) into a half shell (24); and
- fastening the half shell (24) along the bent-over marginal sections (28) to an inlet flange (16) configured for the connection to a component of the internal combustion engine,
**characterized in that**
closure caps (26) are attached to the end faces of the half shell (24), with respective cut-outs being cut into the closure caps (26) for sensors, for gas removal, for example for an exhaust gas return, or for the supply and leading away of cooling fluid.

12. A method in accordance with claim 11,
**characterized in that**
an outlet opening (30) is cut into the unworked part or into the half shell (24); and/or **in that**
an outlet flange (18) surrounding the outlet opening (30) is fastened to the half shell (24).

13. A method in accordance with claim 11 or claim 12,
**characterized in that**
the half shell (24) is trimmed to a predefined length;
and/or **in that**
the unworked part is bent into the half shell (24) on a mandrel having a round cross-section.

## Revendications

1. Collecteur de gaz d'échappement (10) d'une installation de gaz d'échappement d'un moteur à combustion comprenant une coque (12) qui mène le courant de gaz d'échappement et une bride d'entrée (16), qui est réalisée pour être reliée à un composant du moteur à combustion, dans lequel la coque (12) est entièrement ouverte sur un côté d'entrée (19) tourné vers la bride d'entrée (16) et est fixée à la bride d'entrée (16) le long d'une bordure (28) de l'ouverture, dans lequel la coque (12) inclut une partie de base surfacique (24), de préférence d'un seul tenant, qui est cintrée par rapport à un axe de cintrage (B) et dont les portions de bordure (28) s'étendant parallèlement à l'axe de cintrage (B) sont fixées sur la bride d'entrée (16), dans lequel celles des ouvertures latérales (25) qui sont délimitées par les portions de bordure (27) cintrées de la pièce de base (24) qui s'étendent transversalement à l'axe de cintrage (B) et par la surface de fixation (29) de la bride d'entrée (16) sont obturées chacune par un capuchon d'obturation (26),
**caractérisé en ce qu'**il est prévu sur les capuchons d'obturation (26) des évidements pour des capteurs, pour le prélèvement de gaz, par exemple pour un recyclage des gaz d'échappement, ou encore pour l'amenée et l'évacuation de fluide de refroidissement.

2. Collecteur de gaz d'échappement selon la revendication 1,
**caractérisé en ce que** la coque (12) est reliée par coopération de matières, en particulier soudée, avec la bride d'entrée (16) le long de la bordure (28).

3. Collecteur de gaz d'échappement selon la revendication 1 ou 2,
**caractérisé en ce que** les capuchons d'obturation (26) sont au moins partiellement en chevauchement avec la pièce de base (24).

4. Collecteur de gaz d'échappement selon l'une des revendications précédentes,
**caractérisé en ce que** la coque (12) est fabriquée en tôle, en particulier en tôle d'acier, et la coque (12) est fabriquée de préférence au moins partiellement en une tôle d'acier ferritique.

5. Collecteur de gaz d'échappement selon l'une des revendications précédentes,
**caractérisé en ce que** la bride d'entrée (16) est réalisée d'une seule pièce est de préférence en forme de plaque, et/ou **en ce que** la coque (12) comporte une ouverture de sortie (30), et de préférence une bride de sortie (18) qui entoure l'ouverture de sortie (30) est fixée à la coque (12).

6. Collecteur de gaz d'échappement selon l'une des revendications précédentes,
**caractérisé en ce qu'**au moins un tube intérieur (14) menant les gaz est agencé dans la coque (12), ledit tube étant enfiché dans au moins une ouverture d'entrée de la bride d'entrée (16), et **en ce qu'**une fente d'air est réalisée en particulier entre le tube intérieur (14) et la coque (12).

7. Collecteur de gaz d'échappement selon la revendication 6,
**caractérisé en ce qu'**au moins un évidement ou une traversée est prévu(e) dans la coque (12), qui permet un accès audit au moins un tube intérieur (14) menant les gaz, depuis l'espace extérieur.

8. Collecteur de gaz d'échappement selon la revendication 6 ou 7,
**caractérisé en ce que** l'espace entre la coque (12) et ledit au moins un tube intérieur (14) menant les gaz est rempli au moins partiellement avec un matériau thermiquement isolant.

9. Collecteur de gaz d'échappement selon l'une des revendications 6 à 8,
**caractérisé en ce que** l'espace entre la coque (12) et ledit au moins un tube intérieur (14) menant les gaz est réalisé sous la forme d'une enveloppe de refroidissement susceptible d'être traversée par l'écoulement d'un fluide de refroidissement, et en particulier il est prévu au moins un raccord d'entrée de fluide de refroidissement et au moins un raccord de sortie de fluide de refroidissement sur la coque (12).

10. Collecteur de gaz d'échappement selon l'une des revendications 6 à 9,
**caractérisé en ce qu'**au moins deux tubes intérieurs (14) séparés l'un de l'autre sont agencés dans la coque (12), lesquels sont enfichés dans des ouvertures d'entrée différentes de la bride d'entrée (16) en tenant compte d'une succession d'allumage.

11. Procédé pour réaliser un collecteur de gaz d'échappement (10) pour une installation de gaz d'échappement d'un moteur à combustion, comprenant les étapes consistant à :
- fournir un composant brut surfacique ;
- cintrer le composant brut le long d'un axe de cintrage (B) pour former une demi-coque (24) ; et
- fixer la demi-coque (24) le long des portions de bordure (28) rabattues à une bride d'entrée (16) réalisée pour être reliée à un composant du moteur à combustion,
**caractérisé en ce que**
des capuchons d'obturation (26) sont rapportés au niveau des côtés frontaux de la demi-coque (24), et des évidements respectifs sont taillés dans les capuchons d'obturation (26) pour des capteurs, pour le prélèvement de gaz, par exemple pour un recyclage des gaz d'échappement, ou encore pour l'amenée et l'évacuation de fluide de refroidissement.

12. Procédé selon la revendication 11,
**caractérisé en ce que**
une ouverture de sortie (30) est taillée dans le composant brut ou dans la demi-coque (24), et/ou **en ce que**
une bride de sortie (18) qui entoure l'ouverture de sortie (30) est fixée sur la demi-coque (24).

13. Procédé selon la revendication 11 ou 12,
**caractérisé en ce que**
la demi-coque (24) est soutenue sur une longueur prédéterminée, et/ou **en ce que** le composant brut est cintré sur un mandrin avec une section transversale ronde pour donner la demi-coque (24).
